# FASCICULE DE BREVET EUROPEEN

(11) **EP 1 859 897 B1**
(45) Date de publication et mention de la délivrance du brevet: **06.10.2010**
(21) Numéro de dépôt: 07108810.8
(22) Date de dépôt: 24.05.2007
(51) Int. Cl.: B23P 15/00, F01D 5/34, B23K 20/02, C22C 47/04, C22C 47/06, B22F 5/10

(54) **Procédé de fabrication d'un disque de rotor de turbomachine.**
Verfahren zur Herstellung einer Gasturbinenrotorscheibe
Method of manufacturing a turbomachine rotor disk.

(30) Priorité: 24.05.2006 FR 0604739
(43) Date de publication de la demande: 28.11.2007
(73) Titulaire: SNECMA, 75015 Paris (FR)
(72) Inventeur: FABRE, Adrien, 75014, PARIS (FR)
(74) Mandataire: Barbin le Bourhis, Joël

(56) Documents cités:
- WO-A-00/65115
- DE-A1-102004 001 260
- FR-A1- 2 712 630
- US-A1- 2005 166 386

## Description

L'invention se rapporte à la fabrication d'un disque de rotor de turbomachine comportant, dans sa structure, au moins un insert annulaire de renforcement en matériau composite, par exemple un anneau en fil de céramique enrobé de métal comme par exemple du carbure de silicium enrobé de titane. L'invention concerne plus particulièrement un procédé de fabrication d'un tel disque, soit adapté à recevoir des aubes, soit directement aubagé dans la masse, c'est-à-dire formant un anneau aubagé monobloc connu dans la technique sous l'abréviation ANAM.

La demande de brevet US 2005/0166386représentant l'état de la technique le plus proche décrit un procédé de fabrication d'une matrice métallique annulaire renforcée par un insert annulaire en matériau composite. Selon ce procédé, on forme une gorge annulaire dans une première pièce métallique annulaire, on forme une seconde pièce annulaire métallique susceptible de constituer le couvercle de cette gorge, on introduit des spires de fibres composites dans cette gorge, on met en place le couvercle et on soumet l'ensemble à une compression isostatique à chaud.

Au cours de cette opération, le métal du couvercle flue dans la cavité jusqu'à ce que tous les espaces morts entre spires soient comblés.

On sait que cette opération de compression isostatique à chaud est longue et coûteuse.

Avec le procédé antérieur décrit ci-dessus, on ne peut réaliser une matrice métallique comportant un insert annulaire de grande longueur axiale.

De plus, avec le procédé antérieur, la réalisation d'un tambour (pièce résultant de l'assemblage de plusieurs disques) d'ANAMs suppose une soudure après fabrication individuelle de chaque ANAM. Cette opération comporte des risques, d'autant plus que la réalisation de chaque ANAM est coûteuse.

L'invention permet de résoudre ce problème.

Plus particulièrement, l'invention concerne un procédé de fabrication d'un disque de rotor de turbomachine muni d'au moins un insert annulaire de renforcement en matériau composite, caractérisé en ce qu'il consiste :
- à définir un conteneur métallique comprenant deux blocs annulaires coaxialement superposés respectivement, un bloc annulaire extérieur et un bloc annulaire intérieur et deux flasques annulaires latéraux, lesdits blocs et lesdits flasques délimitant entre eux au moins une cavité annulaire,
- à positionner un insert précité dans la ou chaque cavité,
- à soumettre l'ensemble ainsi constitué à une opération de compaction isostatique à chaud, pour former une ébauche monobloc, et
- à usiner au moins un disque de rotor précité dans ladite ébauche.

Selon la définition ci-dessus du procédé conforme à l'invention, il est possible d'intégrer au moins un insert de relativement grande longueur, les deux flasques formant couvercles, se déformant l'un vers l'autre pendant l'opération de compactage isostatique à chaud.

Très avantageusement, l'invention permet aussi, en une seule opération de compactage isostatique à chaud, de réaliser un disque comportant deux inserts espacés axialement. L'intérêt d'un disque ou d'un ANAM à deux inserts a été démontré pour certaines applications, notamment pour un disque de soufflante.

A cet effet, l'invention concerne aussi un procédé selon la définition qui précède, caractérisé en ce que l'on définit les deux blocs annulaires coaxiaux dans un seul bloc annulaire comportant une partie intermédiaire, plus étroite axialement, reliant lesdits deux blocs annulaires intérieur et extérieur de façon à former deux gorges espacées axialement l'une de l'autre, lesdites gorges étant respectivement fermées par les flasques précités pour définir deux cavités annulaires situées de part et d'autre de ladite partie intermédiaire, chaque cavité recevant un insert précité.

Il est à noter que l'ébauche résultant de la compaction isostatique à chaud, dans la variante à deux inserts, peut aussi être utilisée pour réaliser deux disques comportant chacun un seul insert. Il suffit de découper en deux ladite ébauche après l'opération de compactage isostatique à chaud et procéder aux étapes ultérieures d'usinage sur chacune des deux parties. On réduit ainsi de moitié les temps et les coûts relatifs à la compaction isostatique à chaud.

On peut aussi réaliser deux disques aubagés liés comportant chacun un insert.

Eventuellement, on peut intégrer plusieurs inserts précités et notamment plus de deux inserts, en les intercalant, dans une cavité annulaire précitée, avec des anneaux métalliques plats, susceptibles de former après compaction, des cloisons métalliques intermédiaires entre les inserts séparant axialement lesdits inserts.

A partir de l'ébauche, on peut réaliser (par usinage) un disque alvéolé susceptible de recevoir des aubes. On peut aussi usiner un ANAM dans ladite ébauche.

L'invention sera mieux comprise et d'autres avantages de celle-ci apparaitront plus clairement à la lumière de la description qui va suivre d'un procédé conforme à son principe, donnée uniquement à titre d'exemple et faite en référence aux dessins schématiques annexés dans lesquels :
- la figure 1 illustre une bobine plate entrant dans la constitution d'un insert de renforcement ;
- la figure 2 est une coupe II-II de la figure 1 à plus grande échelle ;
- la figure 3 représente une première pièce métallique annulaire munie de deux gorges dans laquelle on dispose des inserts de renforcement ;
- la figure 4 illustre la mise en place des deux flasques annulaires latéraux formant des couvercles ;
- la figure 5 illustre la fermeture des couvercles par soudure sous vide ;
- la figure 6 illustre l'opération de compactage isostatique à chaud ;
- la figure 7 illustre l'ébauche obtenue ;
- la figure 8 illustre les opérations d'usinage sur cette ébauche ; et
- la figure 9 illustre un ANAM bifide à deux inserts, obtenu après cet usinage.

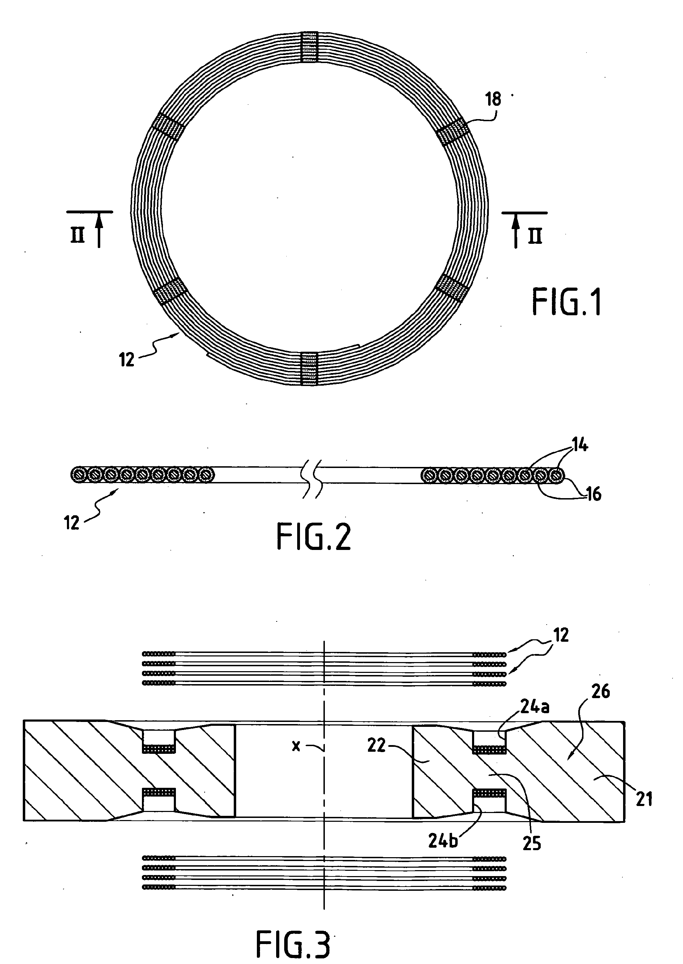

L'une des étapes du procédé consiste à fabriquer séparément une pluralité de bobines plates 12. Chaque bobine 12 a une seule spire par rangée, radialement. Elle est constituée d'un fil de carbure de silicium 14 enrobé de titane 16. Cet exemple n'est pas limitatif. On peut envisager d'autres types de fibres et d'autres alliages pour l'enrobage. Des bandes de colle 18 s'étendant radialement permettent de stabiliser le bobinage. Cependant, la colle sera enlevée ultérieurement. De telles bobines plates sont destinées à être empilées les unes sur les autres à l'intérieur d'un conteneur métallique 20 représenté sur les figures 3 à 5, notamment. Ce conteneur métallique comprend notamment deux blocs annulaires coaxiaux 21, 22 superposés axialement (axe x) respectivement un bloc annulaire extérieur et un bloc annulaire intérieur et deux flasques annulaires latéraux 23a, 23b. Lesdits blocs annulaires et les deux flasques délimitent entre eux au moins une cavité annulaire. Selon l'exemple plus particulièrement représenté, les deux blocs annulaires coaxiaux 21, 22 sont réalisés dans une seule pièce annulaire 26 (ici en titane) comportant une partie intermédiaire 25 reliant lesdits deux blocs annulaires coaxiaux 21, 22. La partie intermédiaire 25 est plus étroite axialement que les deux blocs annulaires 21, 22, ce qui défini deux gorges 24a, 24b espacées axialement l'une de l'autre. Les gorges 24a, 24b sont destinées à être refermées par les deux flasques 23a, 23b, respectivement, pour définir deux cavités annulaires 28a, 28b closes, espacées axialement.

Il est à noter que la partie intermédiaire 25 pourrait ne pas exister, ce qui permettrait de définir un conteneur métallique constitué des deux blocs annulaires coaxiaux 21, 22 indépendants, rassemblés par les deux flasques 23a, 23b annulaires. On définirait ainsi une seule cavité annulaire, de grande longueur axiale.

La ou chaque cavité 28a, 28b est destinée à être remplie par un empilage de bobines plates 12 dont la réalisation est décrite ci-dessus. Le diamètre intérieur d'une telle bobine plate correspond au diamètre extérieur du bloc annulaire intérieur 22 tandis que son diamètre extérieur correspond au diamètre intérieur du bloc annulaire extérieur 21. Autrement dit, la hauteur radiale d'une bobine plate correspond à celle de la cavité, c'est-à-dire aussi à la hauteur radiale de la partie intermédiaire 25 reliant les deux blocs annulaires coaxiaux 21, 22.

Les deux gorges 24a, 24b ouvrent respectivement sur les deux faces axiales de la pièce annulaire centrale 26. Des parties annulaires légèrement en pente relient les bords des gorges aux faces planes respectives de la pièce annulaire centrale. Les deux flasques sont aussi en titane mais de plus faible épaisseur. Ils comportent néanmoins des parties annulaires de profil sensiblement complémentaire de celles de la pièce annulaire centrale. Chaque flasque comporte aussi une nervure 29 de faible épaisseur positionnée et dimensionnée pour s'engager dans l'ouverture de la gorge 24a, 24b correspondante.

L'empilage des bobines plates 12 constitue un insert 30 qui vient remplir chaque cavité. Bien entendu, on pourrait élaborer un tel insert en formant une bobine d'au moins un fil de carbure de silicium enrobé de titane, ladite bobine étant dimensionnée pour occuper sensiblement tout l'espace d'une telle cavité.

Dans le cas d'un insert constitué par un empilage de bobines plates, la colle est éliminée par un solvant lorsque les bobines plates remplissent les gorges.

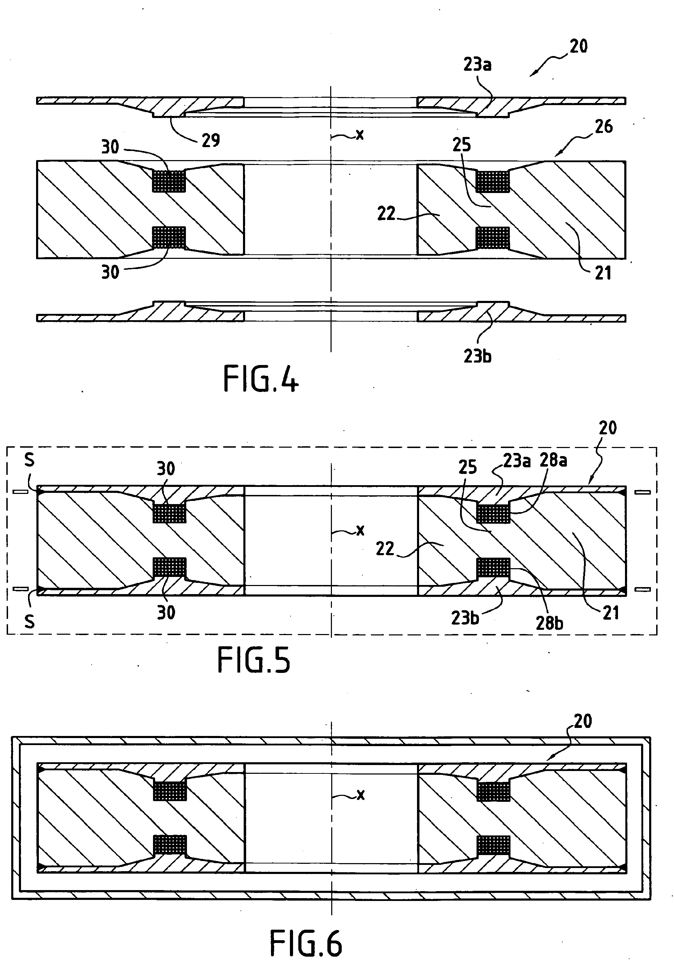

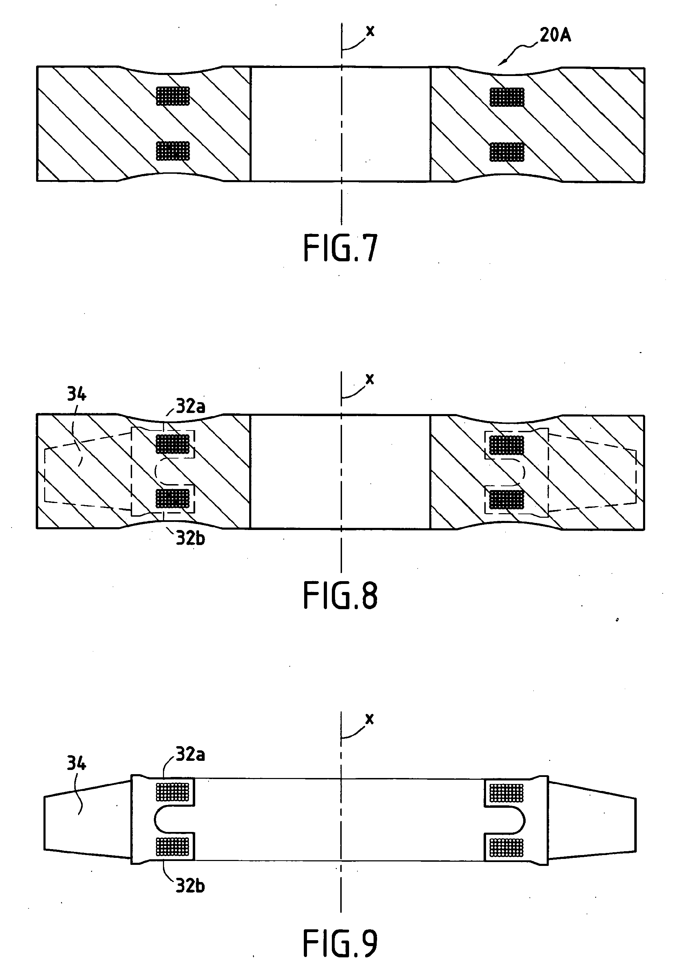

A l'étape illustrée à la figure 5, les deux flasques 23a, 23b sont mis en place de part et d'autre de la pièce annulaire centrale 26 et on procède à l'assemblage des trois parties métalliques en effectuant une soudure périphérique circulaires entre chaque bord de flasque et le bord correspondant de la pièce annulaire centrale. L'assemblage se fait par soudure sous vide au moyen d'un faisceau électronique. A partir de cette étape, on a défini un conteneur métallique en titane 20 comprenant deux cavités 28a, 28b coaxiales et décalées axialement, chaque cavité étant remplie par un insert annulaire de renforcement 30. L'opération suivante illustrée à la figure 6 est une compaction isostatique à chaud. Pour le titane, le conteneur métallique renfermant les inserts est porté à 940° sous 90 MPa. Au cours de cette opération, le titane des deux flasques et le titane qui enrobe les fils fluent dans les cavités 28a, 28b pour combler tous les espaces morts entre les spires. L'ébauche 20A, monobloc, obtenue illustrée à la figure 7 montre que les deux flasques se sont déformées au voisinage des deux cavités. En revanche, les spires de carbure de silicium sont complètement noyées dans la masse métallique devenue homogène.

La figure 8 illustre des opérations classiques d'usinage, connues en soit, qui n'ont pas à être détaillées. Cet usinage a pour but de définir un ANAM bifide, c'est-à-dire comprenant deux anneaux 32a, 32b renforcés par les bobines de carbure de silicium, décalées axialement (c'est-à-dire avec enlèvement de matière entre les deux parties renforcées). Les aubes 34 sont également d'un seul tenant avec l'anneau bifide. Le résultat est illustré à la figure 9.

Comme mentionné précédemment, le même processus peut être utilisé pour obtenir deux disques de rotor comprenant chacun un insert annulaire de renforcement. Pour obtenir deux disques séparés, il suffit de couper l'ébauche en deux parties égales, radialement et d'usiner ensuite séparément chaque partie pour définir le disque central (renfermant l'insert) et les aubes rattachées d'un seul tenant à ce disque. Pour obtenir un tambour (assemblage de plusieurs disques) avec ceux ANAMs, il suffit d'usiner ces derniers, ainsi que la virole les reliant, dans le bloc issu de la compaction isostatique à chaud.

Bien entendu, l'invention n'est pas limitée à la formation d'un anneau aubagé monobloc tel que représenté. Elle peut s'appliquer à la fabrication d'un disque de rotor (sans les aubes) en usinant à la périphérie de celui-ci des alvéoles destinées à recevoir des aubes indépendantes.

L'invention concerne aussi un rotor de turbomachine comprenant au moins un disque obtenu par mise en oeuvre du procédé décrit ainsi qu'une turbomachine équipée d'un tel rotor.

## Revendications

1. Procédé de fabrication d'un disque de rotor de turbomachine muni d'au moins un insert annulaire de renforcement en matériau composite, **caractérisé en ce qu'**il consiste :
- à définir un conteneur métallique (20) comprenant deux blocs annulaires coaxialement superposés, respectivement un bloc annulaire extérieur (21) et un bloc annulaire intérieur (22) et deux flasques annulaires (23a, 23b) latéraux, lesdits blocs et lesdits flasques délimitant entre eux au moins une cavité annulaire (28a, 28b),
- à positionner un insert (30) précité dans la ou chaque cavité,
- à soumettre l'ensemble ainsi constitué à une opération de compaction isostatique à chaud, pour former une ébauche monobloc (20A), et
- à usiner au moins un disque de rotor précité dans ladite ébauche.

2. Procédé selon la revendication 1, **caractérisé en ce que** l'on définit les deux blocs annulaires (21, 22) dans un seul bloc annulaire comportant une partie intermédiaire (25) plus étroite axialement, reliant lesdits deux blocs annulaires, intérieur et extérieur (21, 22) de façon à former deux gorges espacées axialement l'une de l'autre, lesdites gorges étant respectivement fermées par les flasques (23a, 23b) précités pour définir deux cavités annulaires situées de part et d'autre de ladite partie intermédiaire, chaque cavité recevant un insert précité.

3. Procédé selon l'une des revendications précédentes, **caractérisé en ce qu'**on élabore un insert précité en formant une bobine d'au moins un fil de carbure de silicium ou analogue enrobé de métal, ladite bobine étant dimensionnée pour occuper sensiblement tout l'espace d'une cavité précitée.

4. Procédé selon la revendication 1 ou 2, **caractérisé en ce qu'**on élabore un insert (30) précité en formant une pluralité de bobines plates (12), d'un fil de carbure de silicium ou analogue enrobé de métal, chaque bobine plate étant conformée pour occuper toute la hauteur radiale de ladite cavité et **en ce que** l'on empile de telles bobines plates dans la ou chaque cavité jusqu'à la remplir.

5. Procédé selon la revendication 3 ou 4, **caractérisé en ce que** ledit métal enrobant ledit fil de carbure de silicium est le titane.

6. Procédé selon l'une des revendications 1 à 5, **caractérisé en ce que** l'opération d'usinage comprend la formation d'un disque de rotor comportant deux inserts (30) espacés axialement.

7. Procédé selon l'une des revendications 1 à 5, **caractérisé en ce que** l'opération d'usinage comprend la formation de deux disques de rotor distincts comprenant chacun un insert (30) précité.

8. Procédé selon l'une des revendications 1 à 5, **caractérisé en ce que** l'opération d'usinage comprend la formation de deux disques de rotor liés comprenant chacun un insert (30) précité.

9. Procédé selon l'une des revendications précédentes, **caractérisé en ce que** l'opération d'usinage comprend la formation d'aubes (34) d'un seul tenant avec le ou chaque disque.

## Claims

1. A method of fabricating a turbomachine rotor disk provided with at least one annular reinforcing insert of composite material, **characterized in that** it consists:
· in defining a metal container (20) comprising two coaxial annular blocks, respectively an outer annular block (21) and an inner annular block (22), together with two annular side plates (23a, 23b), said blocs and said side plates defining between them at least one annular cavity (28a, 28b);
· in positioning a said insert (30) in the or each cavity;
· in subjecting the resulting assembly to an operation of hot isostatic compacting, in order to form a one-piece blank; and
· in machining at least a said rotor disk in said blank.

2. A method according to claim 1, **characterized in that** the two annular blocks (21, 22) are defined in a single annular block that includes an intermediate portion (25) that is narrower in the axial direction, interconnecting said inner and outer annular blocks (21, 22) so as to form two grooves that are axially spaced apart from each other, said grooves being respectively closed by said side plates (23a, 23b) to define two annular cavities situated on either side of said intermediate portion, each cavity receiving a said insert.

3. A method according to any one of the preceding claims, **characterized in that** a said insert is made by forming a coil of at least one wire of silicon carbide or the like coated in metal, said coil being dimensioned to occupy substantially all of the space in a said cavity.

4. A method according to claim 1 or 2, **characterized in that** a said insert (30) is made by forming a plurality of flat coils (12) of a wire of silicon carbide or the like coated in metal, each flat coil being shaped to occupy the full radial extent of said cavity, and wherein such flat coils are stacked in the or each cavity until the cavity is full.

5. A method according to claim 3 or 4, **characterized in that** said metal coating said silicon-carbide wire is titanium.

6. A method according to claims 1 to 5, **characterized in that** the machining operation comprises forming a rotor disk including two axially spaced-apart inserts (30).

7. A method according to claims 1 to 5, **characterized in that** the machining operation comprises forming two distinct rotor disks, each including a said insert (30).

8. A method according to claims 1 to 5, **characterized in that** the machining operation comprises forming two linked-together rotor disks, each including a said insert (30).

9. A method according to any one of the preceding claims, **characterized in that** the machining operation comprises forming blades (34) integrally with the or each disk.

## Patentansprüche

1. Verfahren zur Herstellung einer Rotorscheibe einer Turbomaschine, die mit wenigstens einem ringförmigen Verstärkungseinsatz aus Verbundwerkstoff versehen ist, **dadurch gekennzeichnet, daß** es darin besteht:
- einen Metallbehälter (20) zu definieren, der zwei koaxial aufeinander angeordnete ringförmige Blöcke, einen ringförmigen Außenblock (21) bzw. einen ringförmigen Innenblock (22), sowie zwei ringförmige seitliche Flansche (23a, 23b) umfaßt, wobei die Blöcke und die Flansche zwischen sich wenigstens einen ringförmigen Hohlraum (28a, 28b) begrenzen,
- einen vorgenannten Einsatz (30) in dem oder jedem Hohlraum anzuordnen,
- die so gebildete Anordnung einem Schritt isostatischen Heißpressens zu unterziehen, um einen einstückigen Rohling (20A) zu bilden, und
- aus dem genannten Rohling wenigstens eine vorgenannte Rotorscheibe zu arbeiten.

2. Verfahren nach Anspruch 1, **dadurch gekennzeichnet, daß** die beiden ringförmigen Blöcke (21, 22) aus einem einzigen ringförmigen Block ausgebildet werden, der ein axial schmaleres Zwischenteil (25) aufweist, das die beiden ringförmigen Blöcke, den inneren und den äußeren (21, 22) miteinander verbindet, so daß zwei axial voneinander beabstandete Nuten gebildet werden, wobei die Nuten jeweils durch die vorgenannten Flansche (23a, 23b) verschlossen werden, um zwei auf beiden Seiten des Zwischenteils gelegene ringförmige Hohlräume zu bilden, wobei jeder Hohlraum einen vorgenannten Einsatz aufnimmt.

3. Verfahren nach einem der vorhergehenden Ansprüche, **dadurch gekennzeichnet, daß** ein vorgenannter Einsatz durch Ausbilden einer Spule aus wenigstens einem metallummantelten Draht aus Siliziumkarbid oder ähnlichem gefertigt wird, wobei die Spule bemessen ist, um im wesentlichen den gesamten Raum eines vorgenannten Hohlraums einzunehmen.

4. Verfahren nach Anspruch 1 oder 2, **dadurch gekennzeichnet, daß** ein vorgenannter Einsatz (30) durch Ausbilden einer Vielzahl von Flachspulen (12) aus einem metallummantelten Draht aus Siliziumkarbid oder ähnlichem gefertigt wird, wobei jede Flachspule gestaltet ist, um die gesamte radiale Höhe des Hohlraums einzunehmen, und daß derartige Flachspulen in dem oder jedem Hohlraum gestapelt werden, bis sie diesen ausfüllen.

5. Verfahren nach Anspruch 3 oder 4, **dadurch gekennzeichnet, daß** das den Draht aus Siliziumkarbid ummantelnde Metall Titan ist.

6. Verfahren nach einem der Ansprüche 1 bis 5, **dadurch gekennzeichnet, daß** der Bearbeitungsschritt die Ausbildung einer Rotorscheibe mit zwei axial beabstandeten Einsätzen (30) umfaßt.

7. Verfahren nach einem der Ansprüche 1 bis 5, **dadurch gekennzeichnet, daß** der Bearbeitungsschritt die Ausbildung von zwei getrennten Rotorscheiben mit jeweils einem vorgenannten Einsatz (30) umfaßt.

8. Verfahren nach einem der Ansprüche 1 bis 5, **dadurch gekennzeichnet, daß** der Bearbeitungsschritt die Ausbildung von zwei verbundenen Rotorscheiben mit jeweils einem vorgenannten Einsatz (30) umfaßt.

9. Verfahren nach einem der vorhergehenden Ansprüche, **dadurch gekennzeichnet, daß** der Bearbeitungsschritt die Ausbildung von Schaufeln (34) aus einem Stück mit der oder jeder Scheibe umfaßt.
